# EUROPÄISCHE PATENTSCHRIFT

(11) **EP 3 277 004 B1**
(45) Veröffentlichungstag und Bekanntmachung des Hinweises auf die Patenterteilung: **09.03.2022**
(21) Anmeldenummer: 16182105.3
(22) Anmeldetag: 29.07.2016
(51) Int. Cl.: H04W 12/40, H04W 12/30, H04W 8/24, H04W 28/02, H04W 8/20

(54) **TEILNEHMERIDENTITÄTSMODUL FÜR EINEN ZUGRIFF AUF EIN MOBILFUNKNETZWERK**
SUBSCRIBER IDENTITY MODULE FOR ACCESS TO MOBILE PHONE NETWORK
MODULE D'IDENTITE D'ABONNE POUR UN ACCES A UN RESEAU HERTZIEN MOBILE

(43) Veröffentlichungstag der Anmeldung: 31.01.2018
(73) Patentinhaber: Deutsche Telekom AG, 53113 Bonn (DE)
(72) Erfinder: SONNTAG, Thomas, 53343 Wachtberg (DE)
(74) Vertreter: Raible Deissler Lehmann Patentanwälte PartG mbB

(56) Entgegenhaltungen:
- EP-A2- 2 688 327
- WO-A1-2015/081884
- HUAWEI ET AL: "UE Slice Association/Overload control Procedure", 3GPP DRAFT; S2-162981 WAS S2-162605_UE SLICE ASSOCIATION_OVERLOAD CONTROL PROCEDURE_V1.1, 3RD GENERATION PARTNERSHIP PROJECT (3GPP), MOBILE COMPETENCE CENTRE ; 650, ROUTE DES LUCIOLES ; F-06921 SOPHIA , Bd. SA WG2, Nr. Nanjing, China; 20160523 - 20160527 27. Mai 2016 (2016-05-27), XP051116481, Gefunden im Internet: URL:http://www.3gpp.org/ftp/tsg_sa/WG2_Arc h/TSGS2_115_Nanjing_China/Docs/ [gefunden am 2016-05-27]
- Anonymus: "3rd Generation Partnership Project; Technical Specification Group Services and System Aspects; Study on the security aspects of the next generation system (Release 14)", 3GPP TR 33.899 V0.5.0 (2016-10, 1 January 2016 (2016-01-01), pages 1-244, XP055479831, Retrieved from the Internet: URL:www.3gpp.org/ftp/Specs/archive/33_seri es/33.899/33899-050.zip [retrieved on 2018-05-30]

## Beschreibung

### TECHNISCHES GEBIET

Die Erfindung betrifft die Kommunikation über Mobilfunknetzwerke im Allgemeinen und insbesondere ein Teilnehmeridentitätsmodul, wie beispielsweise ein SIM, eine eUICC/UICC oder dergleichen, eines Kommunikationsgeräts für einen Zugriff auf ein Mobilfunknetzwerk sowie ein Verfahren zum Betreiben eines solchen Teilnehmeridentitätsmoduls.

### TECHNISCHER HINTERGRUND

Das Kommunizieren mittels eines Kommunikationsgeräts, beispielsweise einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das Kommunikationsgerät mit einem Teilnehmeridentitätsmodul zum sicheren Speichern von Daten ausgestattet ist, die den Benutzer des Kommunikationsgeräts gegenüber dem Mobilfunknetzwerk eindeutig identifizieren. Beispielsweise kommt bei einem Kommunikationsgerät, das dazu ausgestaltet ist, gemäß dem GSM-Standard (Global System for Mobile Communications) zu kommunizieren, ein austauschbares Teilnehmeridentitätsmodul mit dem Namen SIM (Subscriber Identity Module) üblicherweise in Form einer Chipkarte zum Einsatz. Die SIM-Karte enthält Teilnehmerberechtigungsdaten ("Subscription Credentials") zum Identifizieren und Authentisieren des Teilnehmers, einschließlich einer eindeutigen Teilnehmerkennung in Form einer IMSI (International Mobile Subscriber Identity) und eines Authentisierungsschlüssels Ki. Bevor einem Teilnehmer seine SIM-Karte zur Verfügung gestellt wird, werden diese Teilnehmerberechtigungsdaten üblicherweise vom SIM-Karten-Hersteller oder dem Netzbetreiber im Rahmen eines

Personalisierungsprozesses als Teil eines Teilnehmerprofils (auch als Subskriptionsprofil oder kurz Subskription genannt) auf der SIM-Karte sicher hinterlegt. EP3073777 A1 bezieht sich auf ein Verwaltungsverfahren für ein eU1CC, wobei eine Push-Anfrage mit einer Trigger-Nachricht und einer Nutzeridentität zu einem Mobilfunknetzwerk gesendet wird, um das Mobilfunknetzwerk anzuleiten, die Trigger-Nachricht zu einem Ziel-eUICC zu stoßen, wobei die Trigger-Nachricht verwendet wird, um das Ziel-eUICC zu triggern, eine Kommunikation mit einer Mobilfunknetzwerkeinheit zu initiieren. Dabei wird dann eine Kommunikationsverbindung zwischen der Mobilfunknetzwerkeinheit und dem Ziel-eUICC aufgebaut, wobei die Mobilfunknetzwerkeinheit eine Verwaltungsfunktion auf dem Ziel-eUICC ausführt unter Nutzung der Kommunikationsverbindung. Dabei kann die eUICC Verwaltungsfunktion ein Runterladen eines Profils, eine Profilinstallation, eine Profilentfernung sowie Rückwärtszählerinformation oder Zeitfensterinformation umfassen. In der Druckschrift Huawai et al. "UE Slice Association/Overload control procedure", 3GPP Draft, S2-162981 WAS S2-162605_UE Slice Association Overload control procedure_V1.1, 3RD Generation Partnership Project (3GPP), Mobile Competence Centre, 650, Route des Lucioles, F-06921 Sophia wird ein Verfahren der UE-Slice-Zuordnung und wie die UE Dienste aus mehreren Slices gleichzeitig beziehen, beschrieben. Eine Slice-Isolation, d. h., wenn ein Slice überlastet ist, wird ebenfalls behandelt und wie man Auswirkungen auf andere Slices vermeiden kann. Das Dokument "3rd Generation Partnership Project, Technical Specification Group Services and System Aspects, Study on the security aspects of the next generation system (Release 14)" bezieht sich ganz allgemein auf Sicherheitsaspekte bezüglich Systeme zukünftiger Generationen.

Ein bestimmtes Anwendungsgebiet von Teilnehmeridentitätsmodulen, wie SIM-Karten, UICCs, eUICCS und dergleichen, das aller Voraussicht nach in Zukunft beträchtlich wachsen wird, ist die M2M-Kommunikation ("machine-to-machine communication"), d.h. die Kommunikation zwischen Maschinen über ein Mobilfunknetzwerk ohne menschliche Interaktion (auch als "Internet of Things (loT)" bekannt). Bei der M2M-Kommunikation können Daten automatisch zwischen zahlreichen unterschiedlichen Maschinenarten ausgetauscht werden, die mit einem Teilnehmeridentitätsmodul in Form eines M2M-Moduls ausgestattet sind, beispielsweise smarte TV-Systeme, Set-Top-Boxen, Verkaufsautomaten, Fahrzeuge, Verkehrsampeln, Überwachungskameras, Sensorvorrichtungen und dergleichen.

Es ist somit abzusehen, dass mit der stark zunehmenden Anzahl von Teilnehmern, die auf die Dienste eines Mobilfunknetzwerks zugreifen, insbesondere im M2M-Bereich, auch der Bedarf an Teilnehmeridentitätsmodulen bzw. Teilnehmerberechtigungsdaten rasant ansteigen wird. Das Vorhalten einer großen Menge an Teilnehmeridentitätsmodulen bzw. Teilnehmerberechtigungsdaten, insbesondere Teilnehmerkennungen, stellt eine große Herausforderung für Netzbetreiber dar.

Eine Lösung dieses Problems besteht darin, Teilnehmeridentitätsmodule zu klonen, so dass diese zumindest dieselbe Teilnehmerkennung aufweisen. Dadurch sind die Teilnehmeridentitätsmodule vom Mobilfunknetzwerk jedoch voneinander nicht mehr zu unterscheiden. Buchen sich mehrere Teilnehmeridentitätsmodule in das Mobilfunknetz ein, so entstehen dadurch Kollisionen, wobei die Kollisionswahrscheinlichkeit mit der Anzahl der Teilnehmeridentitätsmodule steigt.

### ZUSAMMENFASSUNG DER ERFINDUNG

Vor diesem Hintergrund stellt sich der vorliegenden Erfindung die Aufgabe, ein verbessertes Teilnehmeridentitätsmodul für einen Zugriff auf ein Mobilfunknetzwerk sowie ein verbessertes Verfahren zum Betreiben eines solchen Teilnehmeridentitätsmoduls bereitzustellen, mit denen die vorstehend beschriebenen Nachteile zumindest teilweise behoben werden können.

Diese Aufgabe wird durch die Merkmale der unabhängigen Ansprüche gelöst. Vorteilhafte Weiterbildungsformen sind Gegenstand der abhängigen Ansprüche.

Zur Lösung des Kollisionsproblems bei geklonten Teilnehmeridentitätsmodulen schlägt die Erfindung vor, die Teilnehmeridentitätsmodule mit einem Kommunikationsprofil zu versehen, bei welchem Zeitpunkte bzw. Zeitfenster zum Einbuchen in das Mobilfunknetz vorgegeben sind.

Somit betrifft die Erfindung gemäß einem ersten Aspekt ein Teilnehmeridentitätsmodul für einen Zugriff auf ein Mobilfunknetzwerk. Das Teilnehmeridentitätsmodul umfasst einen Speicher, in welchem ein Kommunikationsprofil gespeichert ist, wobei das Kommunikationsprofil einen Kommunikationszeitpunkt für den Aufbau einer Kommunikationsverbindung zu dem Mobilfunknetzwerk anzeigt. Das Teilnehmeridentitätsmodul umfasst ferner eine Kommunikationsschnittstelle, welche ausgebildet ist, die Kommunikationsverbindung zu dem Mobilfunknetzwerk zu dem Kommunikationszeitpunkt aufzubauen.

Gemäß einer Ausführungsform definiert das Kommunikationsprofil einen Kommunikationszeitraum für den Aufbau einer Kommunikationsverbindung zu dem Mobilfunknetzwerk, welcher den Kommunikationszeitpunkt umfasst.

Gemäß einer Ausführungsform definiert das Kommunikationsprofil einen periodisch wiederkehrenden Kommunikationszeitpunkt oder Kommunikationszeitraum.

Nicht erfindungsgemäß kann das Kommunikationsprofil ein Initialisierungsprofil (auch als Bootstrap-Profil bekannt) sein, welches ausgebildet ist, beim Zugriff auf das Mobilfunknetzwerk ein Teilnehmerprofil herunterzuladen, das eine eindeutige Teilnehmerkennung, insbesondere eine eindeutige IMSI, umfasst.

Erfindungsgemäß ist das Kommunikationsprofil ein Teilnehmerprofil, welches eine Teilnehmerkennung, insbesondere eine IMSI, umfasst.

Weiterhin erfindungsgemäß definiert das Kommunikationsprofil ferner eine Subnetzwerkkennung eines logischen Subnetzwerks des Mobilfunknetzwerks, wobei die Kommunikationsschnittstelle ausgebildet ist, die Kommunikationsverbindung zu dem Subnetzwerk des Mobilfunknetzwerks zu dem Kommunikationszeitpunkt auf der Grundlage der Subnetzwerkkennung aufzubauen.

Gemäß einer Ausführungsform handelt es sich bei dem Teilnehmeridentitätsmodul um ein SIM, eUICC/UICC oder M2M-Modul handelt.

Gemäß einem zweiten Aspekt betrifft die Erfindung eine Gruppe von Teilnehmeridentitätsmodulen für einen Zugriff auf ein Mobilfunknetzwerk mit: einem ersten Teilnehmeridentitätsmodul mit einem Speicher, wie in Anspruch 5 angegeben.

Gemäß einem dritten Aspekt betrifft die Erfindung ein Verfahren zum Betreiben eines Teilnehmeridentitätsmoduls für einen Zugriff auf ein Mobilfunknetzwerk, wie in Anspruch 6 angegeben.

Gemäß einer Ausführungsform definiert das Kommunikationsprofil einen Kommunikationszeitraum für den Aufbau einer Kommunikationsverbindung zu dem Mobilfunknetzwerk, welcher den Kommunikationszeitpunkt umfasst.

Gemäß einer Ausführungsform definiert das Kommunikationsprofil einen periodisch wiederkehrenden Kommunikationszeitpunkt oder Kommunikationszeitraum.

Nicht erfindungsgemäß kann das Kommunikationsprofil ein Initialisierungsprofil umfassen, wobei das Verfahren den weiteren Schritt umfasst, beim Zugriff auf das Mobilfunknetzwerk mit dem Initialisierungsprofil ein Teilnehmerprofil herunterzuladen, das eine eindeutige Teilnehmerkennung, insbesondere eine eindeutige IMSI, umfasst. Erfindungsgemäß ist das Kommunikationsprofil ein Teilnehmerprofil, welches eine Teilnehmerkennung, insbesondere eine IMSI, umfasst.

Weiterhin erfindungsgemäß umfasst das Kommunikationsprofil ferner eine Subnetzwerkkennung eines logischen Subnetzwerks des Mobilfunknetzwerks, wobei der Schritt des Aufbauens einer Kommunikationsverbindung zu dem Mobilfunknetzwerk zu dem Kommunikationszeitpunkt das Aufbauen der Kommunikationsverbindung zu dem logischen Subnetzwerk des Mobilfunknetzwerks zu dem Kommunikationszeitpunkt auf der Grundlage der Subnetzwerkkennung umfasst.

Gemäß einem vierten Aspekt betrifft die Erfindung ein Computerprogramm mit einem Programmcode zum Ausführen des Verfahrens gemäß dem dritten Aspekt der Erfindung, wenn das Computerprogramm auf einem Computer ausgeführt wird. Das Teilnehmeridentitätsmodul gemäß dem ersten Aspekt der Erfindung kann programmtechnisch eingerichtet sein, um das Computerprogramm gemäß dem vierten Aspekt der Erfindung auszuführen.

Die Erfindung kann in Hardware und/oder in Software realisiert werden.

### KURZE BESCHREIBUNG DER FIGUREN

Weitere Ausführungsbeispiele werden Bezug nehmend auf die beiliegenden Zeichnungen erläutert. Es zeigen:
- Fig. 1: eine schematische Darstellung eines Kommunikationssystems mit einem Kommunikationsgerät mit einem Teilnehmeridentitätsmodul gemäß einer Ausführungsform zum Einbuchen in ein Mobilfunknetzwerk;
- Fig. 2: eine schematische Darstellung eines Kommunikationssystems mit mehreren Kommunikationsgeräten mit jeweils einem Teilnehmeridentitätsmodul gemäß einer Ausführungsform zum Einbuchen in ein Mobilfunknetzwerk;
- Fig. 3: eine schematische Darstellung eines Kommunikationssystems mit mehreren Kommunikationsgeräten mit jeweils einem Teilnehmeridentitätsmodul gemäß einer weiteren Ausführungsform zum Einbuchen in ein Mobilfunknetzwerk; und
- Fig. 4: ein teilweises Ablaufdiagramm eines erfindungsgemäßen Verfahrens zum Betreiben eines Teilnehmeridentitätsmoduls zum Einbuchen in ein Mobilfunknetzwerk.

### DETAILIERTE BESCHREIBUNG

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

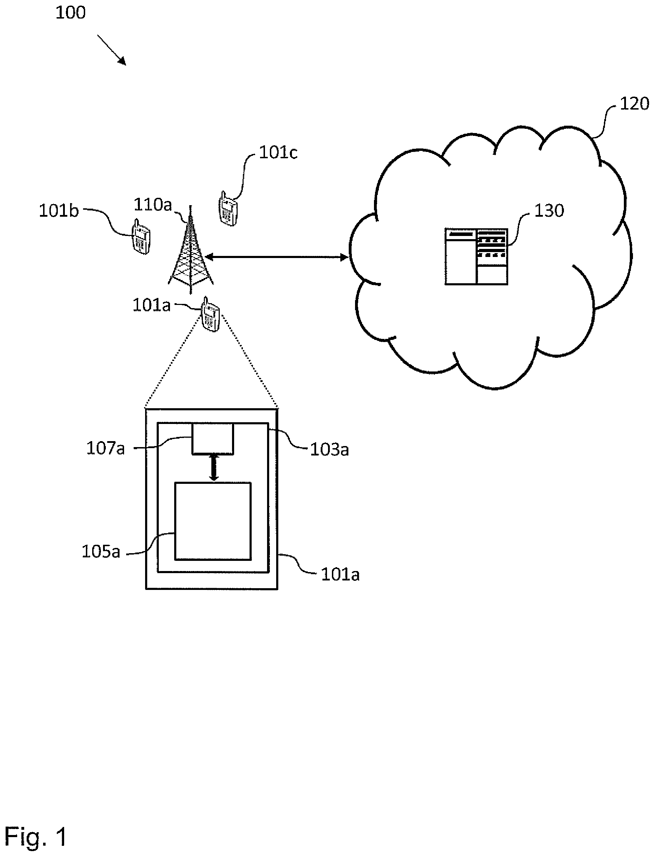

Figur 1 zeigt eine schematische Darstellung eines Kommunikationssystems mit Kommunikationsgeräten 101a-c. Beispielhaft sind in Figur 1 drei Kommunikationsgeräte 101a-c dargestellt. Wie dies nachstehend im Detail beschrieben wird, sind die Kommunikationsgeräte 101a-c dazu ausgebildet, über eine Basisstation 110a mit einem Mobilfunknetzwerk 120, beispielsweise einer Netzwerkentität 130 des Mobilfunknetzwerks 120 zu kommunizieren.

Bei den Kommunikationsgeräten 101a-c kann es sich beispielsweise um Mobiltelefone oder M2M-Vorrichtungen handeln. Die Kommunikationsgeräte 101a-c können jedoch ebenso in Form von anderen Vorrichtungen implementiert sein, die dazu eingerichtet sind, über ein Mobilfunknetzwerk zu kommunizieren, wie beispielsweise ein Tablett-Computer, ein Notebook, ein TV-System, eine Set-Top-Box, ein Verkaufsautomat, ein Kraftfahrzeug, eine Überwachungskamera, eine Sensorvorrichtung und dergleichen.

Wie sich der vergrößerten Darstellung in Figur 1 entnehmen lässt, umfasst das Kommunikationsgerät 101a ein Teilnehmeridentitätsmodul 103a. Nachstehend werden das Kommunikationsgerät 101a und das Teilnehmeridentitätsmodul 103a stellvertretend für die Kommunikationsgeräte 101b und 101c beschrieben, die ebenfalls ein Teilnehmeridentitätsmodul wie das Teilnehmeridentitätsmodul 103a umfassen können.

Das Teilnehmeridentitätsmodul 103a kann beispielsweise als eine eUICC (embedded Universal Integrated Circuit Card) mit einer darauf implementierten SIM-Applikation ausgestaltet sein, d.h. als fester Bestandteil des Kommunikationsgeräts 101a. Alternativ kann das Teilnehmeridentitätsmodul 103a als eine austauschbare UICC (Universal Integrated Circuit Card) oder austauschbare SIM-Karte (Subscriber Identity Module) ausgestaltet sein.

Wie sich der vergrößerten Darstellung in Figur 1 entnehmen lässt, umfasst das Teilnehmeridentitätsmodul 103a einen Speicher 105a und eine Kommunikationsschnittstelle 107a. In einer Ausführungsform kann das Teilnehmeridentitätsmodul 103a ferner einen Prozessor (nicht in Figur 1 dargestellt) umfassen, um beispielsweise Daten aus dem Speicher 105a auszulesen und über die Kommunikationsschnittstelle 107a an das Kommunikationsgerät 101a auszugeben.

Erfindungsgemäß ist in dem Speicher 105a des Teilnehmeridentitätsmoduls 103a ein Kommunikationsprofil gespeichert, welches ausgebildet, dem Teilnehmeridentitätsmodul 103a und damit dem Kommunikationsgerät 101a den Aufbau einer Kommunikationsverbindung zu dem Mobilfunknetzwerk 120 zu ermöglichen. Dabei definiert das Kommunikationsprofil wenigstens einen Kommunikationszeitpunkt, vorzugsweise ein Kommunikationszeitfenster, für den Aufbau der Kommunikationsverbindung zu dem Mobilfunknetzwerk 120. Dementsprechend ist die Kommunikationsschnittstelle 107a des Teilnehmeridentitätsmoduls 103a ausgebildet, die Kommunikationsverbindung zu dem Mobilfunknetzwerk 120 zu dem vom Kommunikationsprofil definierten Kommunikationszeitpunkt (bzw. in einer Ausführungsform innerhalb des vom Kommunikationsprofil definierten Zeitfensters) aufzubauen.

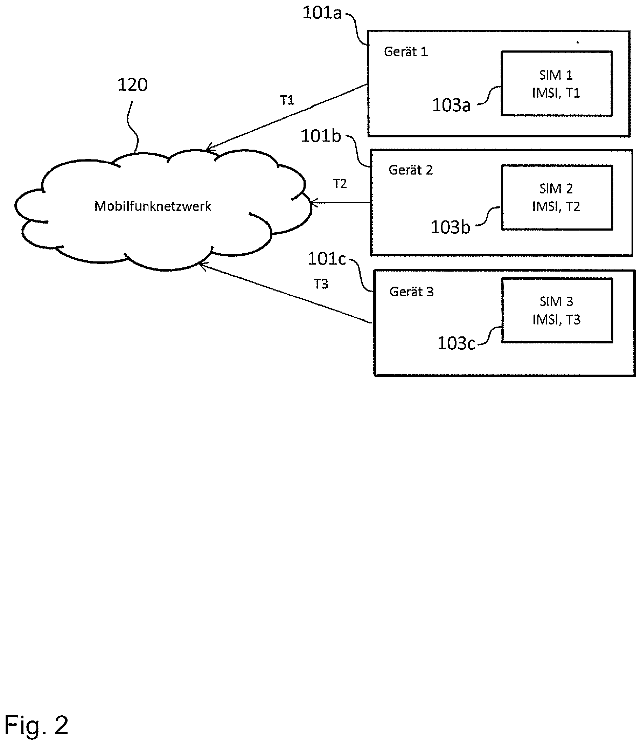

Die vorstehend beschriebene erfindungsgemäße Ausgestaltung des Teilnehmeridentitätsmoduls 103a wird im Zusammenhang mit einem Teilnehmeridentitätsmodul 103b des Kommunikationsgeräts 101 b und einem Teilnehmeridentitätsmodul 103c des Kommunikationsgeräts 101 c in Figur 2 veranschaulicht, die jeweils als SIM 1, SIM 2 und SIM 3 bezeichnet sind. Die in den Teilnehmeridentitätsmodulen 103a-c (bzw. deren Speichern) hinterlegten Kommunikationsprofile umfassen in der in Figur 2 dargestellten Ausführungsform jeweils eine Teilnehmerkennung in Form einer IMSI sowie jeweilige Kommunikationszeitpunkte T1, T2 und T3. Dabei können erfindungsgemäß die drei Teilnehmerkennungen identisch sind, da Kollisionen vermieden werden, sofern die Kommunikationszeitpunkte T1, T2 und T3 unterschiedlich sind. Selbstverständlich kann es sich auch in bei der in Figur 2 dargestellten Ausführungsform um Kommunikationszeitfenster statt um Kommunikationszeitpunkte handeln, die zeitlich nicht überlappen.

In einer Ausführungsform kann das Kommunikationsprofil einen periodisch wiederkehrenden Kommunikationszeitpunkt bzw. ein periodisch wiederkehrendes Zeitfenster zum Aufbau einer Kommunikationsverbindung mit dem Mobilfunknetzwerk 120 definieren. Beispielsweise kann das Kommunikationsprofil einen periodisch wiederkehrenden Kommunikationszeitpunkt oder ein periodisch wiederkehrendes Zeitfenster mit einer Periode von 1 Stunde, 1 Tag oder 1 Woche definieren.

Nicht erfindungsgemäß kann es sich bei dem im Speicher 105a des Teilnehmeridentitätsmoduls 103a hinterlegten Kommunikationsprofil um ein vorläufiges Initialisierungsprofil handeln. Ein solches vorläufiges Initialisierungsprofil, das auch als Bootstrap-Profil bekannt ist, ist ausgebildet, beim ersten Zugriff auf das Mobilfunknetzwerk 120 ein vollständiges Kommunikationsprofil in Form eines Teilnehmerprofils auf das Teilnehmeridentitätsmodul 103a herunterzuladen, wobei das

Teilnehmerprofil für zukünftige Zugriffe auf das Mobilfunknetzwerk 120 eine eindeutige Teilnehmerkennung, insbesondere eine eindeutige IMSI umfasst. Da gemäß Ausführungsformen der Erfindung das heruntergeladene Teilnehmerprofil eine eindeutige Teilnehmerkennung umfassen kann, anhand der das Mobilfunknetzwerk 120 das Teilnehmeridentitätsmodul 103a eindeutig identifizieren kann, kann in Ausführungsformen der Erfindung die Beschränkung auf Kommunikationszeitpunkte oder Kommunikationszeitfenster entfallen.

Erfindungsgemäß handelt es sich jedoch bei dem im Speicher 105a des Teilnehmeridentitätsmoduls 103a hinterlegten Kommunikationsprofil ebenso um ein vollständiges Kommunikationsprofil in Form eines Teilnehmerprofils mit einer Teilnehmerkennung. Bei der Teilnehmerkennung, die eindeutig sein kann, kann es sich insbesondere um eine IMSI handeln.

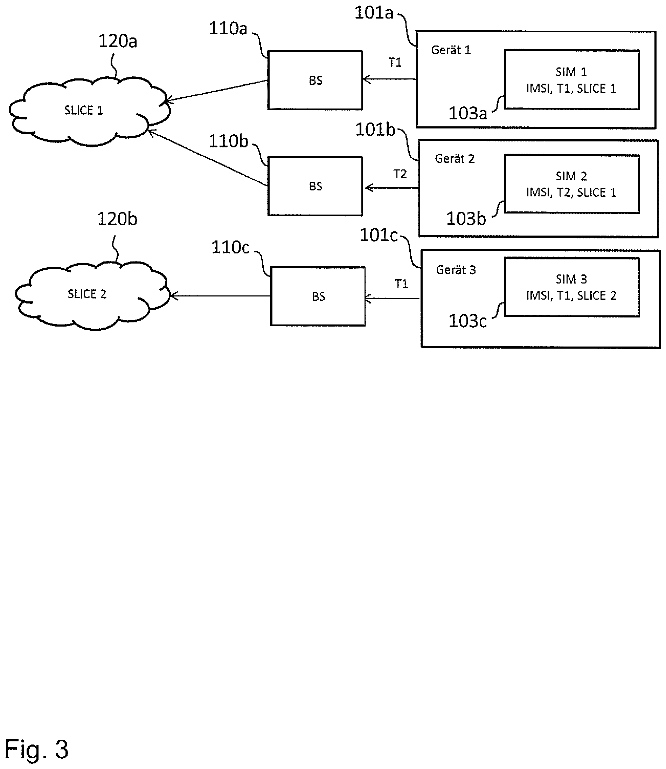

Figur 3 zeigt eine Ausführungsform der Erfindung, die auf der Verwendung von logischen Subnetzwerken, auch als Netzwerk-Slices bezeichnet, des Mobilfunknetzwerks 102 basiert. Derartige Netzwerk-Slices sind insbesondere für Mobilfunknetzwerke gemäß dem 5G-Standard angedacht. In Figur 3 umfasst das Mobilfunknetzwerk 120 beispielhaft ein erstes logisches Subnetzwerk (Slice 1) 120a und ein zweites logisches Subnetzwerk (Slice 2) 120b.

Der Begriff "Netzwerk-Slice" bzw. "Netzwerk-Slicing" betrifft ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt ein Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

Die Netzwerk-Slices 120a,b des Mobilfunknetzwerks 120 können insbesondere von einem SDN-Orchestrator des Mobilfunknetzwerks 120 bereitgestellt, d.h. instanziiert, betrieben und verwaltet werden, wobei die Abkürzung "SDN" für "software defined networking" steht. Ferner kann ein SDN-Controller im Mobilfunknetzwerk 120 vorgesehen sein, der insbesondere den Datenfluss in den Netzwerk-Slices 120a,b regelt.

Bei der in Figur 3 dargestellten Ausführungsform umfasst das jeweilige auf den Teilnehmeridentitätsmodulen 103a-c hinterlegte Kommunikationsprofil neben einer (nicht notwendigerweise eindeutigen) Teilnehmerkennung und einem Kommunikationszeitpunkt bzw. einem Kommunikationszeitfenster zum Aufbau einer Kommunikationsverbindung zu dem Mobilfunknetzwerk 120 eine Subnetzwerkkennung. Gemäß einer Ausführungsform ist die jeweilige Kommunikationsschnittstelle 107a der Teilnehmeridentitätsmodule 103a-c ausgebildet, die Kommunikationsverbindung zu dem Kommunikationszeitpunkt bzw. innerhalb des Kommunikationszeitfensters zu dem Subnetzwerk 120a,b des Mobilfunknetzwerks 120 aufzubauen, das durch die Subnetzwerkkennung identifiziert ist. Dieses Routing auf der Grundlage der Subnetzwerkkennung kann beispielsweise in der Basisstation 101a-c implementiert sein und/oder von einem SDN-Controller des Mobilfunknetzwerks 120 geregelt werden. Gemäß Ausführungsformen der Erfindung können mittels der Hinterlegung einer Subnetzwerkkennung als Teil des jeweiligen Kommunikationsprofils die Teilnehmeridentitätsmodule 103a-c unterschiedlichen Slices 120a, b des Mobilfunknetzwerks 120 zugeordnet werden. Dabei können die Slices 120a, b unterschiedliche Dienste bzw. Netzwerkfunktionen bereitstellen. Auf diese Weise können die Teilnehmeridentitätsmodule 103a-c unterschiedlichen Diensten zugeordnet werden.

Bei der in Figur 3 dargestellten beispielhaften Ausführungsform ist auf den Teilnehmeridentitätsmodulen 103a und 103b dieselbe Subnetzwerkkennung, nämlich "Slice 1", hinterlegt, während auf dem Teilnehmeridentitätsmodul 103c eine andere Subnetzwerkkennung, nämlich "Slice 2", hinterlegt ist. Somit werden beim Einbuchen, d.h. beim Aufbau einer Kommunikationsverbindung zu dem Mobilfunknetzwerk 120, die Teilnehmeridentitätsmodule 103a und 103b mit dem logischen Subnetzwerk 120a des Mobilfunknetzwerks 120 verbunden, während das Teilnehmeridentitätsmodul 103c mit dem logischen Subnetzwerk 120b des Mobilfunknetzwerks 120 verbunden. Aufgrund dieser Aufteilung auf unterschiedliche logische Subnetzwerke 120a, 120b des Mobilfunknetzwerks 120 können Kollisionen auch dann vermieden werden, wenn, wie in Figur 3 beispielhaft dargestellt, das Kommunikationsprofil des Teilnehmeridentitätsmoduls 103a und das Kommunikationsprofil des Teilnehmeridentitätsmoduls 103b eine identische (möglicherweise vorläufige) Teilnehmerkennung ("IMSI") und einen identischen Kommunikationszeitpunkt ("T1") bzw. Kommunikationszeitraum umfassen.

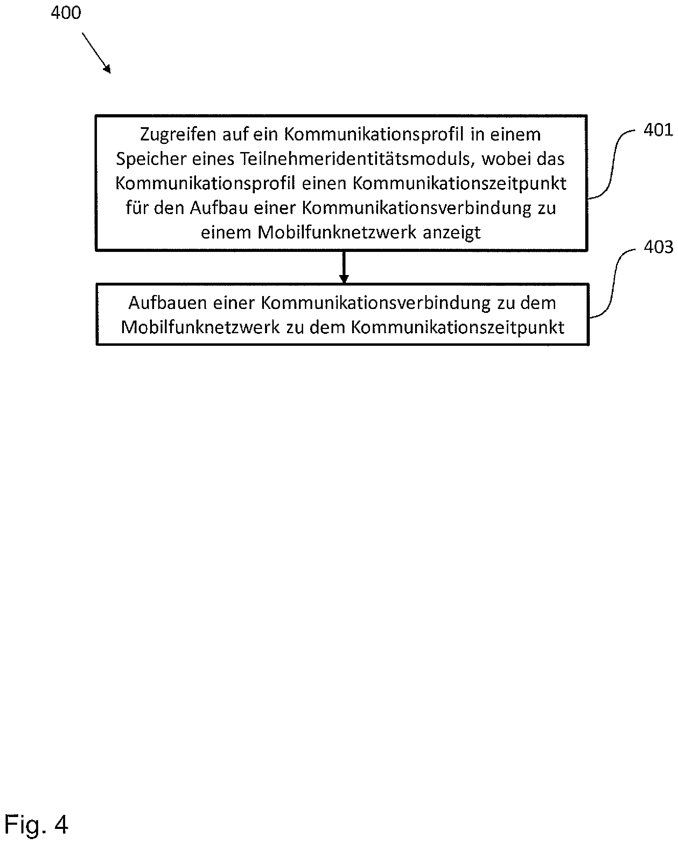

Figur 4 zeigt eine teilweise schematische Darstellung eines Verfahrens 400 zum Betreiben des Teilnehmeridentitätsmoduls 103a-c für einen Zugriff auf das Mobilfunknetzwerk 120. Das Verfahren 400 umfasst einen ersten Schritt 401 des Zugreifens auf das Kommunikationsprofil in dem Speicher 105a des Teilnehmeridentitätsmoduls 103a-c, wobei das Kommunikationsprofil einen Kommunikationszeitpunkt bzw. einen Kommunikationszeitraum für den Aufbau einer Kommunikationsverbindung zu dem Mobilfunknetzwerk 120 anzeigt. Das Verfahren 400 umfasst einen zweiten Schritt 403 des Aufbauens einer Kommunikationsverbindung zu dem Mobilfunknetzwerk 120 zu dem vom Kommunikationsprofil definierten Kommunikationszeitpunkt bzw. innerhalb des vom Kommunikationsprofil definierten Kommunikationszeitraums.

## Patentansprüche

1. Teilnehmeridentitätsmodul (103a-c) für einen Zugriff auf ein Mobilfunknetzwerk (120) mit:
einem Speicher (105a), in welchem ein Kommunikationsprofil gespeichert ist, wobei das Kommunikationsprofil ein Teilnehmerprofil ist, welches eine Teilnehmerkennung umfasst, einen Kommunikationszeitpunkt für den Aufbau einer Kommunikationsverbindung zu dem Mobilfunknetzwerk (120) anzeigt und zum Vermeiden von Kollisionen eine Subnetzwerkkennung eines Subnetzwerks (120a,b) des Mobilfunknetzwerks (120) umfasst; und
einer Kommunikationsschnittstelle (107a), welche ausgebildet ist, die Kommunikationsverbindung zu dem Subnetzwerk (120a,b) des Mobilfunknetzwerks (120) zu dem Kommunikationszeitpunkt auf der Grundlage der Subnetzwerkkennung aufzubauen.

2. Teilnehmeridentitätsmodul (103a-c) nach Anspruch 1, wobei das Kommunikationsprofil einen Kommunikationszeitraum für den Aufbau einer Kommunikationsverbindung zu dem Mobilfunknetzwerk (120) anzeigt, welcher den Kommunikationszeitpunkt umfasst.

3. Teilnehmeridentitätsmodul (103a-c) nach Anspruch 1 oder 2, wobei das Kommunikationsprofil einen periodisch wiederkehrenden Kommunikationszeitpunkt oder Kommunikationszeitraum anzeigt.

4. Teilnehmeridentitätsmodul (103a-c) nach einem der Ansprüche 1 bis 3, wobei die Teilnehmerkennung eine IMSI ist.

5. Teilnehmeridentitätsmodul (103a-c) nach einem der vorstehenden Ansprüche, wobei es sich bei dem Teilnehmeridentitätsmodul (103a-c) um ein SIM, eUICC/UICC oder M2M-Modul handelt.

6. Gruppe von Teilnehmeridentitätsmodulen (103a-c) für einen Zugriff auf ein Mobilfunknetzwerk (120) mit:
einem ersten Teilnehmeridentitätsmodul (103a) mit einem Speicher (105a), in welchem ein erstes Kommunikationsprofil gespeichert ist, wobei das erste Kommunikationsprofil ein Teilnehmerprofil ist, welches
einen ersten Kommunikationszeitpunkt für den Aufbau einer Kommunikationsverbindung zu dem Mobilfunknetzwerk (120) anzeigt und zum Vermeiden von Kollisionen eine erste Subnetzwerkkennung eines Subnetzwerks (120a,b) des Mobilfunknetzwerks (120) umfasst, und einer ersten Kommunikationsschnittstelle (107a), welche ausgebildet ist, die Kommunikationsverbindung zu dem Subnetzwerk (120a,b) des Mobilfunknetzwerks (120) zu dem ersten Kommunikationszeitpunkteitpunkt auf der Grundlage der ersten Subnetzwerkkennung aufzubauen;
einem zweiten Teilnehmeridentitätsmodul (103b) mit einem Speicher, in welchem ein zweites Kommunikationsprofil gespeichert ist, wobei das zweite Kommunikationsprofil ein Teilnehmerprofil ist, welches
einen zweiten Kommunikationszeitpunkt für den Aufbau einer Kommunikationsverbindung zu dem Mobilfunknetzwerk (120) anzeigt und zum Vermeiden von Kollisionen eine zweite Subnetzwerkkennung eines Subnetzwerks (120a,b) des Mobilfunknetzwerks (120) umfasst, und einer zweiten Kommunikationsschnittstelle, welche ausgebildet ist, die Kommunikationsverbindung zu dem Subnetzwerk (120a,b) des Mobilfunknetzwerks (120) zu dem zweiten Kommunikationszeitpunkt auf der Grundlage der zweiten Subnetzwerkkennung aufzubauen; und
einem dritten Teilnehmeridentitätsmodul (103c) mit einem Speicher, in welchem ein drittes Kommunikationsprofil gespeichert ist, wobei das dritte Kommunikationsprofil ein Teilnehmerprofil ist, welches
einen dritten Kommunikationszeitpunkt für den Aufbau einer Kommunikationsverbindung zu dem Mobilfunknetzwerk (120) anzeigt und zum Vermeiden von Kollisionen eine dritte Subnetzwerkkennung eines Subnetzwerks (120a,b) des Mobilfunknetzwerks (120) umfasst, und einer dritten Kommunikationsschnittstelle, welche ausgebildet ist, die Kommunikationsverbindung zu dem Subnetzwerk (120a,b) des Mobilfunknetzwerks (120) zu dem dritten Kommunikationszeitpunkt auf der Grundlage der dritten Subnetzwerkkennung aufzubauen,
wobei das erste Teilnehmeridentitätsmodul (103a), das zweite Teilnehmeridentitätsmodul (103b) und das dritte Teilnehmeridentitätsmodul (103c) eine identische Teilnehmerkennung aufweisen, und wobei der erste Kommunikationszeitpunkt und der zweite Kommunikationszeitpunkt unterschiedlich sind und der erste Kommunikationszeitpunkt und der dritte Kommunikationszeitpunkt identisch sind, und wobei die erste Subnetzwerkkennung und die zweite Subnetzwerkkennung identisch sind und die erste Subnetzwerkkennung und die dritte Subnetzwerkkennung unterschiedlich sind.

7. Verfahren (400) zum Betreiben eines Teilnehmeridentitätsmoduls (103a-c) für einen Zugriff auf ein Mobilfunknetzwerk (120) mit:
Zugreifen (401) auf ein Kommunikationsprofil in einem Speicher (105a) des Teilnehmeridentitätsmoduls (103a-c), wobei das Kommunikationsprofil ein Teilnehmerprofil ist, welches eine Teilnehmerkennung umfasst, einen Kommunikationszeitpunkt für den Aufbau einer Kommunikationsverbindung zu dem Mobilfunknetzwerk (120) anzeigt und zum Vermeiden von Kollisionen eine Subnetzwerkkennung eines Subnetzwerks (120a,b) des Mobilfunknetzwerks (120) umfasst; und
Aufbauen (403) einer Kommunikationsverbindung zu dem Mobilfunknetzwerk (120) zu dem Kommunikationszeitpunkt, wobei der Schritt des Aufbauens (403) einer Kommunikationsverbindung zu dem Mobilfunknetzwerk (120) zu dem Kommunikationszeitpunkt das Aufbauen der Kommunikationsverbindung zu dem Subnetzwerk (120a,b) des Mobilfunknetzwerks (120) zu dem Kommunikationszeitpunkt auf der Grundlage der Subnetzwerkkennung umfasst.

8. Verfahren (400) nach Anspruch 7, wobei das Kommunikationsprofil einen Kommunikationszeitraum für den Aufbau einer Kommunikationsverbindung zu dem Mobilfunknetzwerk (120) anzeigt, welcher den Kommunikationszeitpunkt umfasst.

9. Verfahren (400) nach Anspruch 7 oder 8, wobei das Kommunikationsprofil einen periodisch wiederkehrenden Kommunikationszeitpunkt oder Kommunikationszeitraum anzeigt.

10. Verfahren (400) nach einem der Ansprüche 7 bis 9, wobei die Teilnehmerkennung eine IMSI ist.

11. Computerprogramm mit einem Programmcode zum Ausführen des Verfahrens (400) nach einem der Ansprüche 7 bis 10, wenn das Computerprogramm auf einem Computer ausgeführt wird.

## Claims

1. A subscriber identity module (103a-c) for access to a cellular network (120), having:
a memory (105a) in which a communication profile is stored, wherein the communication profile is a subscriber profile which comprises a subscriber identifier, indicates a communication time point for establishing a communication link to the cellular network (120) and comprises a subnetwork identifier of a subnetwork (120a,b) of the cellular network (120) for avoiding collisions; and
a communication interface (107a) configured for establishing the communication link to the subnetwork (120a,b) of the cellular network (120) at the communication time point based on the subnetwork identifier.

2. The subscriber identity module (103a-c) according to claim 1, wherein the communication profile indicates a communication time period for establishing a communication link to the cellular network (120), said communication time period comprising the communication time point.

3. The subscriber identity module (103a-c) according to claim 1 or 2, wherein the
communication profile indicates a periodically recurring communication time point or communication time period.

4. The subscriber identity module (103a-c) according to one of claims 1 to 3, wherein the subscriber identifier is an IMSI.

5. The subscriber identity module (103a-c) according to any of the preceding claims, wherein the subscriber identity module (103a-c) is a SIM, eUICC/UICC or M2M module.

6. A group of subscriber identity modules (103a-c) for access to a cellular network (120) having:
a first subscriber identity module (103a) having a memory (105a) in which a first communication profile is stored, wherein the first communication profile is a subscriber profile which indicates a first communication time point for establishing a communication link to the cellular network (120) and comprises a first subnetwork identifier of a subnetwork (120a,b) of the cellular network (120) for avoiding collisions, and having a first communication interface (107a) configured for
establishing the communication link to the subnetwork (120a,b) of the cellular network (120) at the first communication time point based on the first subnetwork identifier; a second subscriber identity module (103b) having a memory in which a second communication profile is stored, wherein the second communication profile is a subscriber profile which indicates a second communication time point for establishing a communication link to the cellular network (120) and comprises a second subnetwork identifier of a subnetwork (120a,b) of the cellular network (120) for avoiding collisions, and having a second communication interface configured for
establishing the communication link to the subnetwork (120a,b) of the cellular network (120) at the second communication time point based on the second subnetwork identifier; and
a third subscriber identity module (103a) having a memory in which a third communication profile is stored, wherein the third communication profile is a subscriber profile which indicates a third communication time point for establishing a communication link to the cellular network (120) and comprises a third subnetwork identifier of a subnetwork (120a,b) of the cellular network (120) for avoiding collisions, and having a third communication interface configured for
establishing the communication link to the subnetwork (120a,b) of the cellular network (120) at the third communication time point based on the third subnetwork identifier,
wherein the first subscriber identity module (103a), the second subscriber identity module (103b), and the third subscriber identity module (103c) have an identical subscriber identifier, and wherein the first communication time point and the second communication time point
are different and the first communication time point and the third communication time point are identical, and wherein the first subnetwork identifier and the second subnetwork identifier are identical and the first subnetwork identifier and the third subnetwork identifier are different.

7. A method (400) of operating a subscriber identity module (103a-c) for access to a cellular network (120) having:
accessing (401) a communication profile in a memory (105a) of the subscriber identity module (103a-c), wherein the communication profile is a subscriber profile which comprises a subscriber identifier, indicates a communication time point for establishing a communication link to the cellular network (120) and
comprises a subnetwork identifier of a subnetwork (120a,b) of the cellular network (120) for avoiding collisions; and
establishing (403) a communication link to the cellular network (120) at the communication time point, wherein the step of establishing (403) a communication link to the cellular network (120) at the communication time point comprises establishing the communication link to the subnetwork (120a,b) of the cellular network (120) at the communication time point based on the subnetwork identifier.

8. The method (400) according to claim 7, wherein the communication profile indicates a
communication time period for establishing a communication link to the cellular network (120), said communication time period comprising the communication time point.

9. The method (400) according to claim 7 or 8, wherein the communication profile indicates a periodically recurring communication time point or communication time period.

10. The method (400) according to any of claims 7 to 9, wherein the subscriber identifier is an IMSI.

11. A computer program having a program code for executing the method (400) according to any of claims 7 to 10 when the computer program is run on a computer.

## Revendications

1. Module d'identité d'abonné (103a-c) pour un accès à un réseau radio mobile (120), comportant
une mémoire (105a) dans laquelle un profil de communication est enregistré, ledit profil de communication étant un profil d'abonné qui comprend un identifiant d'abonné, indique un moment de communication pour l'établissement d'une liaison de communication avec le réseau radio mobile (120) et comprend un identifiant de sous-réseau d'un sous-réseau (120a,b) du réseau radio mobile (120) afin d'éviter des collisions ; et
une interface de communication (107a) conçue pour établir la liaison de communication avec le sous-réseau (120a,b) du réseau radio mobile (120) au moment de communication sur la base de l'identifiant de sous-réseau.

2. Module d'identité d'abonné (103a-c) selon la revendication 1, le profil de communication affichant un laps de temps de communication pour l'établissement d'une liaison de communication avec le réseau radio mobile (120), comprenant le moment de communication.

3. Module d'identité d'abonné (103a-c) selon la revendication 1 ou 2, le profil de communication indiquant un moment de communication périodiquement récurrent ou un laps de temps de communication périodiquement récurrent.

4. Module d'identité d'abonné (103a-c) selon l'une des revendications 1 à 3, l'identifiant d'abonné étant une IMSI (identité internationale d'abonné mobile).

5. Module d'identité d'abonné (103a-c) selon l'une des revendications précédentes, ledit module d'identité d'abonné (103a-c) étant un module SIM, eUICC/UICC ou M2M.

6. Groupe de modules d'identités d'abonnés (103a-c) pour un accès à un réseau radio mobile (120), comportant
un premier module d'identité d'abonné (103a) comprenant une mémoire (105a) dans laquelle un premier profil de communication est enregistré, le premier profil de communication étant un profil d'abonné qui indique un premier moment de communication pour l'établissement d'une liaison de communication avec le réseau radio mobile (120) et comprend un premier identifiant de sous-réseau d'un sous-réseau (120a,b) du réseau radio mobile (120) afin d'éviter des collisions, et une première interface de communication (107a) conçue pour établir la liaison de communication avec le sous-réseau (120a,b) du réseau radio mobile (120) au premier moment de communication sur la base du premier identifiant de sous-réseau ;
un deuxième module d'identité d'abonné (103b) comprenant une mémoire dans laquelle un deuxième profil de communication est enregistré, ledit deuxième profil de communication étant un profil d'abonné qui indique un deuxième moment de communication pour l'établissement d'une liaison de communication avec le réseau radio mobile (120) et comprend un deuxième identifiant de sous-réseau d'un sous-réseau (120a,b) du réseau radio mobile (120) afin d'éviter des collisions, et une deuxième interface de communication conçue pour établir la liaison de communication avec le sous-réseau (120a,b) du réseau radio mobile (120) au deuxième moment de communication sur la base du deuxième identifiant de sous-réseau ; et
un troisième module d'identité d'abonné (103c) comprenant une mémoire dans laquelle un troisième profil de communication est enregistré, le troisième profil de communication étant un profil d'abonné qui indique un troisième moment de communication pour l'établissement d'une liaison de communication avec le réseau radio mobile (120) et comprend un troisième identifiant de sous-réseau d'un sous-réseau (120a,b) du réseau radio mobile (120) afin d'éviter des collisions, et une troisième interface de communication (107a) conçue pour établir la liaison de communication avec le sous-réseau (120a,b) du réseau radio mobile (120) au troisième moment de communication sur la base du troisième identifiant de sous-réseau,
le premier module d'identité d'abonné (103a), le deuxième module d'identité d'abonné (103b) et le troisième module d'identité d'abonné (103c) présentant un identifiant d'abonné identique, et le premier moment de communication et le deuxième moment de communication étant différents et le premier moment de communication et le troisième moment de communication étant identiques, et le premier identifiant de sous-réseau et le deuxième identifiant de sous-réseau étant identiques et le premier identifiant de sous-réseau et le troisième identifiant de sous-réseau étant différents.

7. Procédé (400) destiné à faire fonctionner un module d'identité d'abonné (103a-c) pour un accès à un réseau radio mobile (120), comportant les étapes suivantes :
accès (401) à un profil de communication dans une mémoire (105a) du module d'identité d'abonné (103a-c), le profil de communication étant un profil d'abonné qui comprend un identifiant d'abonné, indique un moment de communication pour l'établissement d'une liaison de communication avec le réseau radio mobile (120) et comprend un identifiant de sous-réseau d'un sous-réseau (120a, b) du réseau radio mobile (120) afin d'éviter des collisions ; et
établissement (403) d'une liaison de communication avec le réseau radio mobile (120) au moment de communication, l'étape de l'établissement (403) d'une liaison de communication avec le réseau radio mobile (120) au moment de communication comprenant l'établissement de la liaison de communication avec le sous-réseau (120a,b) du réseau radio mobile (120) au moment de communication sur la base de l'identifiant de sous-réseau.

8. Procédé (400) selon la revendication 7, le profil de communication indiquant un laps de temps de communication pour l'établissement d'une liaison de communication avec le réseau radio mobile (120), qui comprend le moment de communication.

9. Procédé (400) selon la revendication 7 ou 8, le profil de communication affichant un moment de communication périodiquement récurrent ou un laps de temps de communication périodiquement récurrent.

10. Procédé (400) selon l'une des revendications 7 à 9, l'identifiant d'abonné étant une IMSI.

11. Programme informatique comportant un code de programme pour la mise en œuvre du procédé (400) selon l'une des revendications 7 à 10, lorsque le programme informatique est exécuté par un ordinateur.
